# EUROPÄISCHE PATENTSCHRIFT

(11) **EP 3 205 529 B1**
(45) Veröffentlichungstag und Bekanntmachung des Hinweises auf die Patenterteilung: **02.08.2023**
(21) Anmeldenummer: 17152882.1
(22) Anmeldetag: 24.01.2017
(51) Int. Cl.: B60L 7/26, B60L 7/16, B60L 7/18, B60L 53/20

(54) **VERFAHREN ZUM BETREIBEN EINES ELEKTROANTRIEBS EINES FAHRZEUGS SOWIE FAHRZEUG MIT EINEM ELEKTROANTRIEB**
METHOD FOR OPERATING OF AN ELECTRIC DRIVE OF A VEHICLE AND MOTOR VEHICLE WITH AN ELECTRIC DRIVE
PROCÉDÉ DE FONCTIONNEMENT D'UNE PROPULSION ÉLECTRIQUE D'UN VÉHICULE AUTOMOBILE ET VÉHICULE AUTOMOBILE ÉQUIPÉ D'UNE PROPULSION ÉLECTRIQUE

(30) Priorität: 11.02.2016 DE 102016202059
(43) Veröffentlichungstag der Anmeldung: 16.08.2017
(73) Patentinhaber: VOLKSWAGEN AKTIENGESELLSCHAFT, 38440 Wolfsburg (DE)
(72) Erfinder: Mann, Andreas, 38102 Braunschweig (DE); Fischer, Viktor, 38518 Gifhorn-Gamsen (DE); Becker, Bernd, 38550 Isenbüttel (DE)

(56) Entgegenhaltungen:
- EP-A1- 2 139 739
- DE-A1-102011 085 347
- DE-A1-102013 201 563
- DE-A1-102014 208 999
- DE-A1-102014 213 701
- US-A1- 2014 067 183
- US-A1- 2015 191 100

## Beschreibung

Die vorliegende Erfindung betrifft ein Verfahren zum Betreiben eines Elektroantriebs eines Fahrzeugs, der Elektroantrieb aufweisend eine Elektromaschine, wobei das Fahrzeug zumindest in einem Segelbetrieb oder in einem Rekuperationsbetrieb betreibbar ist, wobei ferner im Segelbetrieb eine Bewegung des Fahrzeugs durch die Elektromaschine nicht oder zumindest im Wesentlichen nicht beeinflusst wird und im Rekuperationsbetrieb zur Erzeugung elektrischer Energie aus einer Bewegungsenergie des Fahrzeugs die Elektromaschine in einem Generatorbetrieb betrieben wird, und wobei die Elektromaschine mit einem Traktionsspeicher, der zum Speichern und Bereitstellen elektrischer Energie für die Elektromaschine ausgebildet ist, in einem Traktionsnetz elektrisch gekoppelt ist. Ferner betrifft die Erfindung ein Fahrzeug mit einem Elektroantrieb, der Elektroantrieb aufweisend zumindest eine Elektromaschine, wobei das Fahrzeug zumindest in einem Segelbetrieb und einem Rekuperationsbetrieb betreibbar ist, wobei die Elektromaschine im Segelbetrieb eine Bewegung des Fahrzeugs nicht oder zumindest im Wesentlichen nicht beeinflusst und im Rekuperationsbetrieb die Elektromaschine zur Erzeugung elektrischer Energie aus einer Bewegungsenergie des Fahrzeugs in einem Generatorbetrieb betreibbar ist, und wobei die Elektromaschine mit einem Traktionsspeicher, der zum Speichern und Bereitstellen elektrischer Energie für die Elektromaschine ausgebildet ist, in einem Traktionsnetz elektrisch gekoppelt ist.

In einer Vielzahl moderner Fahrzeuge werden Elektroantriebe mit einer Elektromaschine zur Erzeugung eines Vortriebs des Fahrzeugs eingesetzt. Dabei können die Elektroantriebe sowohl als alleinige Antriebe im Fahrzeug vorgesehen sein, als auch, wie beispielsweise in Fahrzeugen mit einem Hybridantrieb, zusammen mit einem weiteren Antrieb, insbesondere einem Verbrennungsmotor, zum Vortrieb des Fahrzeugs vorgesehen sein. Dabei sind verschiedene Vorgehensweisen zur Reduktion eines Kraftstoffverbrauchs dieser Fahrzeuge bekannt. Energiemanagementsysteme zur Reduktion eines Energieverbrauchs sind bspw. aus der DE 10 2013 201 563 A1, der US 2014/067183 A1 sowie der US 2015/191100 A1 bekannt. Bekannte Maßnahmen sind dabei beispielsweise eine Rekuperation von Bewegungsenergie eines Fahrzeugs durch eine Elektromaschine, die dann in einem Generatorbetrieb betrieben wird. Eine weitere Möglichkeit stellt ein sogenannter Segelbetrieb dar, bei dem der bzw. die Antriebe von einer Bewegung des Fahrzeugs abgekoppelt werden und das Fahrzeug sich aufgrund seiner Massenträgheit weiter fortbewegt. Auswahlverfahren, welche Betriebsstrategie angewendet werden soll, sind ebenfalls bekannt, siehe beispielsweise die DE 10 2014 213 701 A1, die DE 102 29 035 A1 bzw. die DE 10 2013 211 534 A1. Auch ein Prädizieren eines Fahrverlaufs ist grundsätzlich bekannt, siehe beispielsweise die EP 2 139 739 A1 oder die DE 10 2011 085347 A1.

Wie oben beschrieben, kann die Elektromaschine des Elektroantriebs insbesondere zumindest für einen Segelbetrieb bzw. einem Rekuperationsbetrieb des Fahrzeugs betrieben werden. Dabei ergeben sich insbesondere für einen Elektroantrieb bzw. ein Traktionsnetz, in dem dieser Elektroantrieb angeordnet ist, verschiedene bevorzugte Spannungsniveaus für die einzelnen Betriebsmodi. So wird bei einem Rekuperationsbetrieb eine möglichst große Spannungsdifferenz zwischen einer Leerlaufspannung eines Traktionsspeichers, der im Traktionsnetz angeordnet ist, und der als Generator betriebenen Elektromaschine von Vorteil sein, um eine möglichst gute Aufladung des Traktionsspeichers zu erreichen. Bei einem Vorhandensein von mehreren elektrischen Energiespeichern können diese entsprechend angesteuert werden, um eine möglichst gute Aufladung der einzelnen Energiespeicher im Rekuperationsbetrieb bereitstellen zu können, siehe beispielsweise die DE 10 2014 208 999 A1. Dem entgegengesetzt ist in einem Segelbetrieb der Elektromaschine ein möglichst hohes Spannungsniveau im Traktionsnetz vorteilhaft, da am Ende des Segelbetriebs die Elektromaschine des Elektroantriebs und/oder ein Anlasser des Verbrennungsmotors gestartet werden muss, wodurch im Traktionsnetz ein hoher Spannungsabfall auftreten kann. Insbesondere bei einer Parallelschaltung des Traktionsnetzes mit einem Bordnetz des Fahrzeugs muss dieser hohe Spannungsabfall dabei durch ein zuvor hohes Spannungsniveau ausgeglichen und abgefangen werden um eine Betriebssicherheit des Fahrzeugs zu gewährleisten, da andernfalls beispielsweise ein Lenkungssteuergerät und/oder eine Lichtleistung eingeschränkt sein könnten. Somit kann das Spannungsniveau im Traktionsnetz nicht derart eingestellt werden, dass für beide oben beschriebenen Betriebszustände des Elektroantriebs ein ideales Spannungsniveau vorherrscht.

Es ist daher Aufgabe der vorliegenden Erfindung, die voranstehend beschriebenen Nachteile zumindest teilweise zu beheben. Insbesondere ist es Aufgabe der Erfindung, ein Verfahren zum Betreiben eines Elektroantriebs eines Fahrzeugs sowie ein Fahrzeug mit einem Elektroantrieb bereitzustellen, die in besonders einfacher und kostengünstiger Weise den Betrieb des Elektroantriebs verbessern, wobei insbesondere eine elektrische Umgebung einer Elektromaschine des Elektroantriebs auf einen möglichen Betriebsmodus des Elektroantriebs passend eingestellt werden kann.

Voranstehende Aufgabe wird gelöst durch ein Verfahren zum Betreiben eines Elektroantriebs eines Fahrzeugs mit den Merkmalen des unabhängigen Anspruchs 1. Ferner wird die Aufgabe gelöst durch ein Fahrzeug mit den Merkmalen des nebengeordneten Anspruchs 4. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Verfahren zum Betreiben eines Elektroantriebs eines Fahrzeugs, der Elektroantrieb aufweisend eine Elektromaschine, wobei das Fahrzeug zumindest in einem Segelbetrieb und in einem Rekuperationsbetrieb betreibbar ist, wobei ferner im Segelbetrieb eine Bewegung des Fahrzeugs durch die Elektromaschine nicht oder zumindest im Wesentlichen nicht beeinflusst wird und im Rekuperationsbetrieb zur Erzeugung elektrischer Energie aus einer Bewegungsenergie des Fahrzeugs die Elektromaschine in einem Generatorbetrieb betrieben wird, und wobei die Elektromaschine mit einem Traktionsspeicher, der zum Speichern und Bereitstellen elektrischer Energie für die Elektromaschine ausgebildet ist, in einem Traktionsnetz elektrisch gekoppelt ist. Ein erfindungsgemäßes Verfahren ist dadurch gekennzeichnet, dass durch eine Kontrolleinheit des Elektroantriebs eine Prädiktion eines Fahrverlaufs des Fahrzeugs zumindest hinsichtlich des Segelbetriebs und des Rekuperationsbetriebs durchgeführt wird und dass durch die Kontrolleinheit im Traktionsnetz ein elektrisches Spannungsniveau der Leerlaufspannung des Traktionsspeichers basierend auf der Prädiktion des Fahrverlaufs, eingestellt wird.

Durch ein erfindungsgemäßes Verfahren kann ein Elektroantrieb eines Fahrzeugs betrieben werden. Das Fahrzeug weist dafür den Elektroantrieb auf, der beispielsweise auch Teil eines Hybridantriebs des Fahrzeugs sein kann. Insbesondere sind das Fahrzeug und damit der Elektroantrieb zumindest in einem Segelbetrieb und einem Rekuperationsbetrieb betreibbar. Dabei wird im Rekuperationsbetrieb durch die Elektromaschine, die dann als Generator betrieben wird, eine Bewegungsenergie des Fahrzeugs in elektrische Energie umgewandelt. Dazu ist die Elektromaschine im Rekuperationsbetrieb mit zumindest einer Achse, bevorzugt einer Vortriebsachse, des Fahrzeugs mechanisch gekoppelt. Im Segelbetrieb ist diese Kopplung aufgehoben, so dass das Fahrzeug nicht oder zumindest im Wesentlichen nicht beeinflusst durch die Elektromaschine rollen kann. Bevorzugt kann vorgesehen sein, dass bei einem Hybridfahrzeug auch der Verbrennungsmotor bei diesem Segelbetrieb von den Achsen, insbesondere den Vortriebsachsen, des Fahrzeugs entkoppelt ist und bevorzugt sogar abgeschaltet werden kann. Zur Bereitstellung elektrischer Energie, die beispielsweise von der Elektromaschine verbraucht wird wenn diese als Elektromotor verwendet wird, bzw. zur Aufnahme von elektrischer Energie, die durch die Elektromaschine in deren Generatorbetrieb erzeugt wird, ist ein Traktionsspeicher vorgesehen, der zusammen mit der Elektromaschine in einem Traktionsnetz elektrisch gekoppelt ist. Dadurch kann ein Fließen von elektrischer Energie zwischen dem Traktionsspeicher und der Elektromaschine in beiden Richtungen bereitgestellt werden. Dabei kann dieses Traktionsnetz auch mit einem Bordnetz des Fahrzeugs gekoppelt, insbesondere parallel geschaltet, sein, so dass sich für Spannungsniveaus im Traktionsnetz weitere Randbedingungen ergeben. Diese Randbedingungen können dabei insbesondere dadurch begründet sein, dass Verbraucher im Bordnetz zumeist eine Mindestspannung benötigen, um sicher betrieben werden zu können. Durch die Parallelschaltung muss diese Mindestspannung auch im Traktionsnetz vorgehalten werden um eine Betriebssicherheit der Verbraucher im Bordnetz zu gewährleisten.

Erfindungsgemäß ist vorgesehen, dass bei der Durchführung eines erfindungsgemäßen Verfahrens durch eine Kontrolleinheit des Elektroantriebs eine Prädiktion eines Fahrverlaufs des Fahrzeugs vorgenommen wird. Durch diese Prädiktion kann insbesondere vorausgesagt werden, ob sich das Fahrzeug während der nächsten Betriebsphase mit Verzögerungswunsch mit größerer Wahrscheinlichkeit in einem Segelbetrieb oder in einem Rekuperationsbetrieb befinden wird. Dies bedeutet beispielsweise ein Erkennen, ob der Benutzer des Fahrzeugs das Fahrzeug in naher Zukunft eher einfach rollen lassen wird oder ob er aktiv einen Bremsvorgang einleiten wird. Insbesondere ist erfindungswesentlich vorgesehen, dass durch die Kontrolleinheit ein Spannungsniveau im Traktionsnetz basierend auf dieser Prädiktion des Fahrverlaufs eingestellt wird. Da durch die Prädiktion eine Information geschaffen wird, ob in naher Zukunft eher ein Segelbetrieb oder eher ein Rekuperationsbetrieb des Elektroantriebs wahrscheinlicher ist, kann diese Information gemäß dem erfindungsgemäßen Verfahren genutzt werden, um ein Spannungsniveau im Traktionsnetz entsprechend einzustellen. Eine besonders angepasste Spannung im Traktionsnetz kann dadurch erreicht werden. Insbesondere auch hinsichtlich einer möglichen parallelen Schaltung des Traktionsnetzes mit einem Bordnetz kann dies vorteilhaft sein, da auch dies berücksichtigt werden kann und somit zu jeder Zeit ein genügend hohes Spannungsniveau im Gesamtnetz, das aus einer parallelen Verschaltung des Traktionsnetzes und des Bordnetzes entsteht, vorhaltbar ist. Die Kontrolleinheit, die zum Prädizieren des Fahrverlaufs und zum Einstellen des elektrischen Spannungsniveaus ausgebildet ist, kann dabei eine separate Kontrolleinheit des Elektroantriebs, aber selbstverständlich auch eine in ein übergeordnetes Fahrzeugkontrollsystem integrierte Kontrolleinheit sein. Auch eine mehrteilige Kontrolleinheit für einzelne Schritte des Verfahrens ist denkbar. Insgesamt kann somit durch ein erfindungsgemäßes Verfahren ein Betrieb eines Elektroantriebs dahin gehend verbessert werden, dass basierend auf einer wahrscheinlichen zukünftigen Betriebsart des Elektroantriebs ein Spannungsniveau eines Traktionsnetzes, in dem der Elektroantrieb angeordnet ist, eingestellt wird. Eine Effizienz der einzelnen Betriebsmodi kann dadurch erhöht werden.

Bei dem erfindungsgemäßen Verfahren ist vorgesehen, dass durch die Kontrolleinheit bei einem prädizierten Segelbetrieb im Traktionsnetz ein höheres Spannungsniveau der Leerlaufspannung des Traktionsspeichers eingestellt wird als bei einem prädizierten Rekuperationsbetrieb, dass durch die Kontrolleinheit bei einem prädizierten Segelbetrieb im Traktionsnetz ein maximales oder zumindest im Wesentlichen maximales Spannungsniveau und bei einem prädizierten Rekuperationsbetrieb im Traktionsnetz ein minimales oder zumindest im Wesentlichen minimales Spannungsniveau eingestellt wird. Auf diese Weise kann ein besonders gut angepasstes Spannungsniveau im Traktionsnetz eingestellt werden. Dabei kann durch das höhere Spannungsniveau bei einem prädizierten Segelbetrieb ermöglicht werden, dass dieser Segelbetrieb möglichst lange aufrechterhalten werden kann. Dies kann insbesondere dadurch begründet werden, dass ein derartiges Spannungsniveau durch einen unvermeidbaren Verbrauch, beispielsweise durch elektrische Verbraucher im Fahrzeug, bzw. durch Verluste allmählich abnimmt. Durch ein besonders hohes Spannungsniveau am Beginn des Segelbetriebs kann somit bereitgestellt werden, dass ein Abbruchpunkt des Segelbetriebs, bei dem dieser beendet werden muss, um den Elektroantrieb und/oder, insbesondere bei einem bevorzugten Einsatz eines erfindungsgemäßen Verfahrens in einem Hybridfahrzeug, einen Anlasser des Verbrennungsmotors noch sicher starten zu können, möglichst spät eintritt. Dem entgegengesetzt kann durch ein möglichst niedriges Spannungsniveau in einem prädizierten Rekuperationsbetrieb ein Aufladen des Traktionsspeichers durch die als Generator betriebene Elektromaschine besonders effizient ausgestaltet werden. Dieses Aufladen des Traktionsspeichers ist dabei besonders effizient, wenn zwischen einer Leerspannung des elektrischen Energiespeichers und einer durch die als Generator betriebene Elektromaschine bereitgestellten Spannung ein möglichst großer Unterschied herrscht. Dieser Unterschied kann maximiert werden, indem das Spannungsniveau des Traktionsnetzes, das insbesondere in diesem Fall der durch die Elektromaschine bereitgestellten Spannung entspricht, möglichst niedrig, insbesondere minimal, eingestellt wird. Durch ein Einstellen eines maximalen bzw. minimalen Spannungsniveaus können diese Vorteile weiter maximiert werden.

Darüber hinaus ist das erfindungsgemäße Verfahren dahin gehend ausgebildet, dass durch die Kontrolleinheit die Prädiktion des Fahrverlaufs basierend auf zumindest einer der folgenden Größen durchgeführt wird:
- Fahrpedalstellung
- Fahrpedalbewegung
- aktueller Fahrverlauf
- Zustand des Fahrzeugs
- Navigationsdaten
- Umgebungsdaten

Dabei ist diese Liste nicht abgeschlossen, so dass, soweit nötig bzw. sinnvoll, auch weitere Größen als Basis einer Prädiktion des Fahrverlaufs verwendet werden können. Insbesondere durch eine Fahrpedalstellung bzw. eine Fahrpedalbewegung kann dabei ein Erkennen eines Fahrerwunsches nach einem einzuleitenden Segelbetrieb bzw. Rekuperationsbetrieb erkannt werden. Eine Information über eine Fahrpedalbewegung kann dabei insbesondere eine Geschwindigkeit dieser Bewegung als auch eine Beschleunigung dieser Bewegung des Fahrpedals umfassen. Eine Geschwindigkeit des Fahrzeugs und ein aktueller Fahrverlauf, beispielsweise ob bereits ein Segelbetrieb vorliegt, kann beispielsweise für eine Entscheidung darüber ausgewertet werden, ob überhaupt ein Segelbetrieb bzw. ein Rekuperationsbetrieb in naher Zukunft sinnvoll ist. Auch ein Zustand des Fahrzeugs kann in die Prädiktion des Fahrverlaufs einbezogen werden. So können beispielsweise Situationen auftreten, in denen ein Segelbetrieb grundsätzlich ausgeschlossen ist. So kann eine derartige Situation zum Beispiel eine laufende Regeneration eines Dieselpartikelfilters sein, in der insbesondere ein Ausschalten eines Verbrennungsmotors, das oftmals mit einem Segelbetrieb einhergeht, grundsätzlich nicht möglich ist. Durch eine Einbeziehung von Navigationsdaten kann beispielsweise berücksichtigt werden, in welcher Umgebung das Fahrzeug sich derzeit befindet. So kann in einer städtischen Umgebung eine andere Prädiktion vorgenommen werden, als wenn sich das Fahrzeug beispielsweise auf einer Landstraße oder Autobahn befindet. Auch Geländeinformationen, wie beispielsweise Steigungen und Gefälle, können in die Prädiktion des Fahrverlaufs, basierend auf Navigationsdaten, mit einbezogen werden. Navigationsdaten weisen dabei einen fließenden Übergang zu Umgebungsdaten auf, die beispielsweise ein Verkehrsaufkommen in der Umgebung des Fahrzeugs umfassen. Beispielsweise ist in einem Verkehrsstau, in dem sich das Fahrzeug befindet, ein Segelbetrieb oftmals nicht sinnvoll. Derartige Umgebungsdaten können dabei beispielsweise auch durch Kameras, Abstandssensoren und/oder weitere Sensoren des Fahrzeugs ermittelt werden. Insgesamt kann durch die Einbeziehung verschiedenster Größen eine besonders genaue Prädiktion des Fahrverlaufs und dadurch ein besonders effizienter Betrieb des Elektroantriebs in einem Fahrzeug bereitgestellt werden.

Ferner ist bei einem erfindungsgemäßen Verfahren vorgesehen, dass durch die Kontrolleinheit der Fahrverlauf durch einen Fahrverlaufswert parametrisiert wird, dass durch die Kontrolleinheit der Fahrverlaufswert mit zumindest einem Fahrverlaufsgrenzwert verglichen wird und dass durch die Kontrolleinheit, basierend auf dem Vergleichsergebnis, die Prädiktion des Fahrverlaufs durchgeführt wird. Auf diese Weise kann die Prädiktion des Fahrverlaufs durch einen einzelnen Parameter, den Fahrverlaufswert, beschrieben werden. Eine besonders einfache Entscheidung, welche der möglichen Betriebsmodi des Elektroantriebs am wahrscheinlichsten vorliegen wird, kann dadurch ermöglicht werden. So kann bei dem Vergleich des Fahrverlaufswerts mit dem Fahrverlaufsgrenzwert der Fahrverlaufswert größer oder kleiner als der Fahrverlaufsgrenzwert sein. Je nachdem wie dieser Vergleich ausfällt, kann das Ergebnis der Prädiktion des Fahrverlaufs entsprechend gewählt werden. Eine besonders einfache Prädiktion des Fahrverlaufs kann dadurch bereitgestellt werden.

Zudem ist das erfindungsgemäße Verfahren dahin gehend weiterentwickelt, dass zwei Fahrverlaufsgrenzwerte verwendet werden, die als ein Segelgrenzwert und ein Rekuperationsgrenzwert ausgebildet sind, wobei der Segelgrenzwert größer ist als der Rekuperationsgrenzwert, und wobei bei einer Überschreitung des Segelgrenzwerts durch den Fahrverlaufswert durch die Kontrolleinheit ein Segelbetrieb prädiziert wird, bei einer Unterschreitung des Rekuperationsgrenzwerts durch den Fahrverlaufswert durch die Kontrolleinheit ein Rekuperationsbetrieb prädiziert wird und bei einer Überschreitung des Rekuperationsgrenzwerts und bei einer Unterschreitung des Segelgrenzwerts durch die Kontrolleinheit eine aktuelle Prädiktion des Fahrverlaufs beibehalten wird. Besonders bevorzugt kann dabei der Fahrverlaufswert beispielsweise Werte zwischen 0 und 1 annehmen, wobei als Segelgrenzwert 0,6 und als Rekuperationsgrenzwert 0,4 verwendet werden. Diese Werte haben sich als besonders geeignet erwiesen, um eine aussagekräftige Prädiktion des Fahrverlaufs durchführen zu können. Dabei wird für jeden Fahrverlaufswert zwischen den Werten 0,6 und 1 ein Segelbetrieb prädiziert. Analog dazu wird für jeden Fahrverlaufswert zwischen 0 und 0,4 ein Rekuperationsbetrieb prädiziert. Für Werte zwischen 0,4 und 0,6, die durch den Fahrverlaufswert angenommen werden, wird die derzeitig verwendete Prädiktion des Fahrverlaufs beibehalten, bis eine Überschreitung beziehungsweise Unterschreitung eines der beiden Fahrverlaufsgrenzwerte eine Änderung der Prädiktion nötig macht. Dadurch kann vermieden werden, dass eine Prädiktion des Fahrverlaufs, bei einer Schwankung des Fahrverlaufswerts um einen der beiden Fahrverlaufsgrenzwerte, sich ständig ändert. Die Prädiktion des Fahrverlaufs wird somit beibehalten, bis der Fahrverlaufswert einen Wert annimmt, der eine sichere Änderung der Prädiktion zulässt. Ein derartiges Verhalten einer Steuerung bzw. Regelung kann dabei als Hysterese bezeichnet werden.

Ferner kann bei einem erfindungsgemäßen Verfahren vorgesehen sein, dass durch die Kontrolleinheit ein Benutzer des Fahrzeugs ermittelt wird und dass durch die Kontrolleinheit eine Prädiktion des Fahrverlaufs, angepasst auf ein in einer Speichereinheit hinterlegtes Benutzerverhalten des ermittelten Benutzers, vorgenommen wird. Verschiedene Benutzer des Fahrzeugs können verschiedene Benutzerverhalten an den Tag legen. So ist ein Benutzer eher geneigt, einen Segelbetrieb des Fahrzeugs einzuleiten, wobei ein anderer Fahrer eher aktiv in eine Verzögerung des Fahrzeugs eingreift und somit für diesen Fahrer ein Rekuperationsbetrieb angepasster ist. Durch das Erkennen eines Benutzers und durch den dadurch ermöglichten Rückgriff auf ein in einer Speichereinheit hinterlegtes Benutzerverhalten des ermittelten Benutzers kann benutzerspezifisch ein unterschiedliches Prädiktionsverhalten durch ein erfindungsgemäßes Verfahren bereitgestellt werden. So kann im obigen Beispiel für einen sportlichen Fahrer mit großer Bremsneigung ein Rekuperationsbetrieb mit höherer Wahrscheinlichkeit prädiziert werden, wohingegen bei einem umweltbewussten Fahrer ein Segelbetrieb ein größeres Gewicht bei der Prädiktion des Fahrverlaufs erhält. Diese unterschiedlichen Benutzerverhalten können dabei beispielsweise durch unterschiedliche Fahrverlaufsgrenzwerte ausgedrückt werden. Insgesamt kann somit durch ein erfindungsgemäßes Verfahren ein besonders benutzerfreundlicher Betrieb eines Elektroantriebs eines Fahrzeugs bereitgestellt werden, wodurch ein Komfort für den Benutzer erhöht werden kann.

Auch eine Anzeige der aktuell vorgenommenen Prädiktion des Fahrverlaufs für einen Benutzer des Fahrzeugs ist denkbar. Auf diese Weise kann beispielsweise dem Benutzer die derzeitige Prädiktion des Fahrverlaufs angezeigt werden, wodurch es dem Benutzer ermöglicht werden kann, sein Fahrverhalten, falls nötig und/oder gewünscht, entsprechend anzupassen.

Ferner kann ein erfindungsgemäßes Verfahren dahin gehend ausgebildet sein, dass durch die Kontrolleinheit die Prädiktion, angepasst an eine in einer Speichereinheit hinterlegte Historie des Fahrverlaufs des Fahrzeugs, vorgenommen wird. Dabei kann diese Speichereinheit dieselbe Speichereinheit sein, in der ein Benutzerverhalten hinterlegt ist, aber gegebenenfalls auch eine andere Speichereinheit. Eine hinterlegte Historie des Fahrverlaufs kann dabei insbesondere beispielsweise Informationen beinhalten, auf welchen Strecken, die das Fahrzeug bereits gefahren ist und welche Prädiktionen eines Fahrverlaufs auf diesen Strecken vorgenommen worden sind. Wird dieselbe Strecke erneut durch das Fahrzeug abgefahren, besteht eine hohe Wahrscheinlichkeit dafür, dass derselbe Fahrverlauf erneut auftritt. Eine Prädiktion des Fahrverlaufs kann in diesem Fall durch Rückgriff auf die hinterlegte Historie des Fahrverlaufs einfacher, schneller und insbesondere mit weniger Rechenaufwand durchgeführt werden. Eine Vereinfachung eines erfindungsgemäßen Verfahrens kann dadurch bereitgestellt werden.

Gemäß einem zweiten Aspekt der Erfindung wird die Aufgabe gelöst durch Fahrzeug mit einem Elektroantrieb, der Elektroantrieb aufweisend zumindest eine Elektromaschine, wobei das Fahrzeug zumindest in einem Segelbetrieb und einem Rekuperationsbetrieb betreibbar ist, wobei die Elektromaschine im Segelbetrieb eine Bewegung des Fahrzeugs nicht oder zumindest im Wesentlichen nicht beeinflusst und im Rekuperationsbetrieb die Elektromaschine zur Erzeugung elektrischer Energie aus einer Bewegungsenergie des Fahrzeugs in einem Generatorbetrieb betreibbar ist, und wobei die Elektromaschine mit einem Traktionsspeicher der zum Speichern und Bereitstellen elektrischer Energie für die Elektromaschine ausgebildet ist, in einem Traktionsnetz elektrisch gekoppelt ist. Ein erfindungsgemäßes Fahrzeug ist dadurch gekennzeichnet, dass der Elektroantrieb eine Kontrolleinheit zum Ausführen eines Verfahrens gemäß dem ersten Aspekt der Erfindung zum Betreiben des Elektroantriebs aufweist. Dementsprechend bringt ein erfindungsgemäßes Fahrzeug die gleichen Vorteile mit sich, wie sie ausführlich mit Bezug auf ein erfindungsgemäßes Verfahren gemäß dem ersten Aspekt der Erfindung erläutert worden sind. Auch bringt ein erfindungsgemäßes Fahrzeug sämtliche Vorrichtungen und Elemente mit, die zur Ausführung eines erfindungsgemäßen Verfahrens nötig sind. Insbesondere weist ein erfindungsgemäßes Fahrzeug bzw. der Elektroantrieb des erfindungsgemäßen Fahrzeugs, eine Kontrolleinheit auf, die zum Ausführen des Verfahrens gemäß dem ersten Aspekt der Erfindung ausgebildet ist. Diese Kontrolleinheit kann dabei Teil des Elektroantriebs, aber selbstverständlich auch Teil eines übergeordneten Kontrollsystems des Fahrzeugs sein.

Bevorzugt kann bei einem erfindungsgemäßen Fahrzeug vorgesehen sein, dass der Elektroantrieb Teil eines Hybridantriebs des Fahrzeugs ist, wobei der Hybridantrieb zumindest den Elektroantrieb und einen Verbrennungsmotor aufweist. Durch einen derartigen Hybridantrieb kann ein erfindungsgemäßes Fahrzeug besonders energiesparend betrieben werden. Insbesondere können beispielsweise in einem Segelbetrieb des Fahrzeugs sowohl der Elektroantrieb als auch der Verbrennungsmotor von einer Bewegung des Fahrzeugs entkoppelt und insbesondere bevorzugt auch ausgeschaltet werden. Ein besonders niedriger Verbrauch des Fahrzeugs kann in diesem Fall dadurch bereitgestellt werden. Auch im Rekuperationsbetrieb kann beispielsweise der Verbrennungsmotor von einer Bewegung des Fahrzeugs entkoppelt sein und nur der als Generator betriebene Elektroantrieb für eine Verzögerung des Fahrzeugs sorgen. Insgesamt kann durch einen derartigen Hybridantrieb des Fahrzeugs im Vergleich zu einem reinen Verbrennungsantrieb des Fahrzeugs ein deutlicher Energieeinsparungseffekt erzielt werden.

Darüber hinaus kann ein erfindungsgemäßes Fahrzeug dahin gehend ausgebildet sein, dass der Elektroantrieb eine Speichereinheit zum Hinterlegen von Daten eines Betriebs des Elektroantriebs, insbesondere ein Benutzerverhalten eines Benutzers und/oder eine Historie eines Fahrverlaufs des Fahrzeugs, aufweist. Eine derartige Speichereinheit kann dabei ebenfalls Teil des Elektroantriebs sein, aber auch in eine Fahrzeugelektronik integrierbar bzw. integriert sein. Durch Hinterlegung von Daten eines Betriebs des Elektroantriebs, die insbesondere bevorzugt ein Benutzerverhalten eines Benutzers und/oder eine Historie eines Fahrverlaufs des Fahrzeugs umfassen können, können bereits getätigte Prädiktionen des Fahrverlaufs erneut aufgerufen werden. Ein Rechenaufwand bei der Prädiktion eines Fahrverlaufs kann dadurch vermindert werden, wodurch insbesondere zum einen eine Vornahme der Prädiktion beschleunigt und/oder zum anderen die dafür nötige Rechenkapazität verkleinert werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Elemente mit gleicher Funktion und Wirkungsweise sind in den einzelnen Figuren mit denselben Bezugszeichen versehen. Es zeigen schematisch:
- Fig. 1: ein durch ein erfindungsgemäßes Verfahren betreibbarer Elektroantrieb,
- Fig. 2: ein erfindungsgemäßes Fahrzeug, und
- Fig. 3: ein erfindungsgemäßes Verfahren.

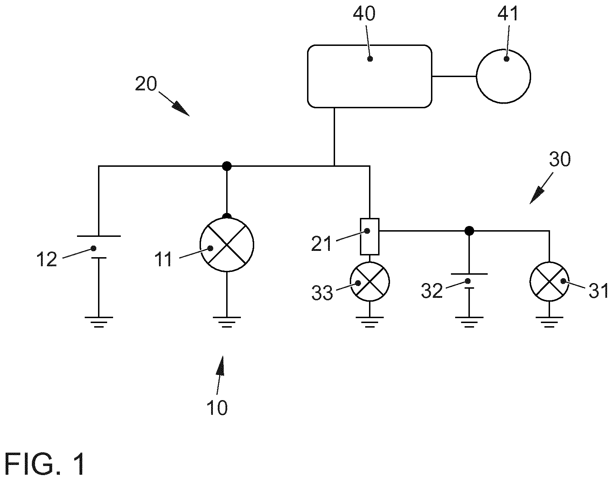

In Fig. 1 ist ein erfindungsgemäßer Elektroantrieb 10 gezeigt. Dabei weist der Elektroantrieb 10 insbesondere eine Elektromaschine 11 auf, die zusammen mit einem Traktionsspeicher 12 in einem Traktionsnetz 20 angeordnet ist. Dieses Traktionsnetz 20 ist über einen Potentialverteiler21 mit einem Bordnetz 30 elektrisch parallel gekoppelt. In diesem Bordnetz 30 sind verschiedene Verbraucher 33 angeordnet, von denen ein Anlasser 31 eines Verbrennungsmotors 50 (nicht mit abgebildet) und ein Bordnetzspeicher 32 explizit gekennzeichnet sind. Ferner weist der Elektroantrieb 10 eine Kontrolleinheit 40 auf, die insbesondere zum Ausführen eines erfindungsgemäßen Verfahrens ausgebildet ist. Daten, die bei der Ausführung eines erfindungsgemäßen Verfahrens mit einbezogen werden können, können in einer Speichereinheit 41 abgelegt werden, die ebenfalls mit der Kontrolleinheit 40 verbunden ist. Dabei kann insbesondere vorgesehen sein, dass durch die Kontrolleinheit 40 eine Prädiktion eines Fahrverlaufs des Fahrzeugs 100 (nicht mit abgebildet), in der der Elektroantrieb 10 verbaut ist, vorgenommen wird. Diese Prädiktion des Fahrverlaufs wird durch die Kontrolleinheit 40 dafür verwendet, ein elektrisches Spannungsniveau im Traktionsnetz 20, basierend auf dieser Prädiktion einzustellen. Dabei kann das Spannungsniveau insbesondere derart eingestellt werden, dass bei einem prädizierten Segelbetrieb 102 (nicht mit abgebildet) des Elektroantriebs 10 ein hohes, insbesondere maximales Spannungsniveau und bei einem prädizierten Rekuperationsbetrieb 103 (nicht mit abgebildet) ein niedriges, insbesondere minimales Spannungsniveau im Traktionsnetz 20 eingestellt wird. Dabei kann ferner zusätzlich berücksichtigt werden, dass, wenn das Traktionsnetz 20 parallel zu einem Bordnetz 30 geschaltet ist, insbesondere dieses minimale Spannungsniveau derart gewählt ist, dass ein Betrieb der Verbraucher 33 im Bordnetz 30 zu jeder Zeit sichergestellt werden kann.

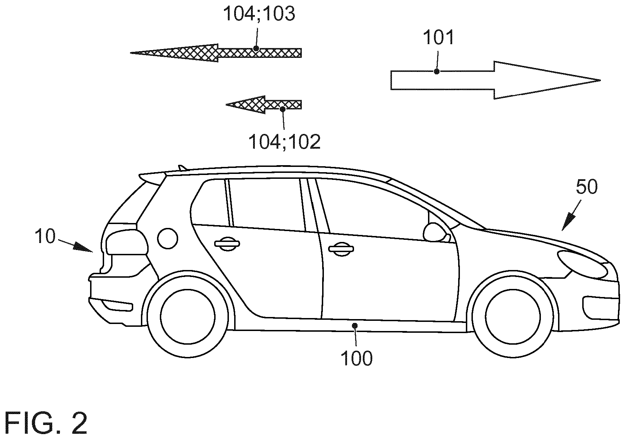

Fig. 2 zeigt schematisch ein Fahrzeug 100, das insbesondere als Teil eines Hybridantriebs einen Verbrennungsmotor 50 und einen Elektroantrieb 10 aufweist. Schematisch dargestellt durch einen Pfeil ist eine Bewegung 101 des Fahrzeugs 100. Durch einen Betrieb des Elektroantriebs 10 können verschiedene Bremsmomente 104 auf das Fahrzeug 100 wirken, wobei beispielhaft ein Bremsmoment 104 eines Segelbetriebs 102 und ein Bremsmoment 104 eines Rekuperationsbetriebs 103 gezeigt sind. Beide Betriebsmodi des Elektroantriebs 1 verzögern somit das Fahrzeug 100. Sie unterscheiden sich insbesondere jedoch in einem Spannungsniveau, das bevorzugt in einem Bordnetz 30 (nicht mit abgebildet), in dem der Elektroantrieb 10 angeordnet ist, eingestellt werden sollte. Durch eine Prädiktion des Fahrverlaufs des Fahrzeugs 100 und damit insbesondere eine Prädiktion, ob demnächst ein Segelbetrieb 102 oder ein Rekuperationsbetrieb 103 wahrscheinlicher ist, kann es durch ein erfindungsgemäßes Verfahren ermöglicht werden, ein Spannungsniveau im Traktionsnetz 20 angepasst an diese Prädiktion einzustellen. Ein besonders bedarfsgerechter Betrieb eines Elektroantriebs 10 in einem erfindungsgemäßen Fahrzeug 100 kann dadurch bereitgestellt werden.

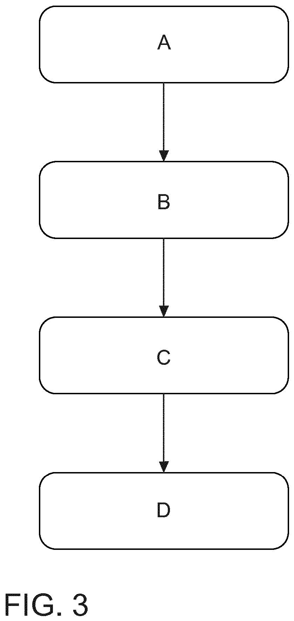

In Fig. 3 ist schematisch ein erfindungsgemäßes Verfahren gezeigt. Dabei sind die verschiedenen Abschnitte des Verfahrens mit den Buchstaben A, B, C und D gekennzeichnet. In einem ersten Abschnitt A eines erfindungsgemäßen Verfahrens, das insbesondere durch eine Kontrolleinheit 40 eines Elektroantriebs 10 eines Fahrzeugs 100 (jeweils nicht mit abgebildet) ausgeführt werden kann, wird eine derzeitige Fahrsituation des Fahrzeugs 100 ermittelt. Dabei können beispielsweise verschiedene Größen des Fahrzeugs 100, zum Beispiel eine Fahrpedalstellung, eine Fahrpedalbewegung, eine Geschwindigkeit des Fahrzeugs 100 ausgewertet werden. Auch ein in einer Speichereinheit 41 abgelegtes Benutzerverhalten und/oder eine Historie des Fahrverlaufs des Fahrzeugs 100 kann in die Prädiktion mit einfließen. Aus diesen Informationen kann in der Kontrolleinheit 40 insbesondere ermittelt werden, welcher Betriebsmodus durch den Fahrer des Fahrzeugs 100 in naher Zukunft gewünscht wird. Dieser Fahrerwunsch ist durch einen Fahrverlaufswert, der beispielsweise Werte zwischen 0 und 1 annehmen kann, parametrisiert werden. Im nächsten Abschnitt Beines erfindungsgemäßen Verfahrens wird dieser ermittelte Fahrverlaufswert mit einem oder mehreren Fahrverlaufsgrenzwerten, zum Beispiel einem Rekuperationsgrenzwert der Größe 0,4 und einem Segelgrenzwert der Größe 0,6, verglichen, um eine grundsätzliche Prädiktion des Fahrverlaufs, insbesondere hinsichtlich eines Segelbetriebs 102 und eines Rekuperationsbetriebs 103 des Elektroantriebs 10 vornehmen zu können. Im nächsten Abschnitt C eines erfindungsgemäßen Verfahrens kann überprüft werden, ob dieses erkannte Wunschverhalten des Fahrers des Fahrzeugs 100 umgesetzt werden kann. Dafür kann beispielsweise ein Zustand des Fahrzeugs 100 ausgewertet werden. Dies beinhaltet beispielsweise ein Erkennen von Situationen, in denen dem Wunsch des Fahrers nicht entsprochen werden kann, beispielsweise wenn ein Segelbetrieb 102 nicht vorgenommen werden kann, da der Verbrennungsmotor 50 (nicht mit abgebildet) des Fahrzeugs 100 nicht abgeschaltet werden kann, da ein laufender Verbrennungsmotor 50 beispielsweise für eine Regeneration eines Dieselpartikelfilters des Fahrzeugs 100 benötigt wird. Auch weitere Bedingungen, wie beispielsweise Navigationsdaten und/oder Umgebungsdaten, die beispielsweise erkennen lassen, in welcher Umgebung sich das Fahrzeug 100 befindet und welche Verkehrssituation vorherrscht, können auf die letztendlich durchgeführte Prädiktion des Fahrverlaufs Einfluss nehmen. Sobald die Prädiktion des Fahrverlaufs abgeschlossen wird, wird im letzten Abschnitt D eines erfindungsgemäßen Verfahrens ein elektrisches Spannungsniveau im Traktionsnetz 20 (nicht mit abgebildet), basierend auf dieser Prädiktion des Fahrverlaufs, eingestellt. Insbesondere wird dabei ein hohes, maximales oder zumindest im Wesentlichen maximales Spannungsniveau für einen Segelbetrieb und ein niedriges, minimales, oder zumindest im Wesentlichen minimales Spannungsniveau für einen Rekuperationsbetrieb im Traktionsnetz eingestellt. Auf diese Weise kann erreicht werden, dass sowohl für einen Segelbetrieb 102 (nicht mit abgebildet) als auch für einen Rekuperationsbetrieb 103 (nicht mit abgebildet) eines Elektroantriebs 10 jeweils ein möglichst angepasstes Spannungsniveau im Traktionsnetz 20 bereitgestellt werden kann. Ein besonders wirtschaftlicher und effektiver Betrieb eines Elektroantriebs 10 kann dadurch bereitgestellt werden.

### Bezugszeichenliste

- 10: Elektroantrieb
- 11: Elektromaschine
- 12: Traktionsspeicher
- 20: Traktionsnetz
- 21: Potentialverteiler
- 30: Bordnetz
- 31: Anlasser
- 32: Bordnetzspeicher
- 33: Verbraucher
- 40: Kontrolleinheit
- 41: Speichereinheit
- 50: Verbrennungsmotor
- 100: Fahrzeug
- 101: Bewegung
- 102: Segelbetrieb
- 103: Rekuperationsbetrieb
- 104: Bremsmoment

## Patentansprüche

1. Verfahren zum Betreiben eines Elektroantriebs (10) eines Fahrzeugs (100), der Elektroantrieb (10) aufweisend eine Elektromaschine (11), wobei das Fahrzeug (100) zumindest in einem Segelbetrieb (102) und einem Rekuperationsbetrieb (103) betreibbar ist, wobei ferner im Segelbetrieb (102) eine Bewegung (101) des Fahrzeugs (100) durch die Elektromaschine (11) nicht oder zumindest im Wesentlichen nicht beeinflusst wird und im Rekuperationsbetrieb (103) zur Erzeugung elektrischer Energie aus einer Bewegungsenergie des Fahrzeugs (100) die Elektromaschine (11) in einem Generatorbetrieb betrieben wird, und wobei die Elektromaschine (11) mit einem Traktionsspeicher (12), der zum Speichern und Bereitstellen elektrischer Energie für die Elektromaschine (11) ausgebildet ist, in einem Traktionsnetz (20) elektrisch gekoppelt ist,
wobei durch eine Kontrolleinheit (40) des Elektroantriebs (10) eine Prädiktion eines Fahrverlaufs des Fahrzeugs (100) zumindest hinsichtlich des Segelbetriebs (102) und des Rekuperationsbetriebs (103) durchgeführt wird, **dadurch gekennzeichnet, dass** durch die Kontrolleinheit (40) im Traktionsnetz (20) ein elektrisches Spannungsniveau der Leerlaufspannung des Traktionsspeichers (12) basierend auf der Prädiktion des Fahrverlaufs eingestellt wird,
wobei durch die Kontrolleinheit (40) bei einem prädizierten Segelbetrieb (102) im Traktionsnetz (20) ein höheres Spannungsniveau der Leerlaufspannung des Traktionsspeichers (12) eingestellt wird als bei einem prädizierten Rekuperationsbetrieb (103),
wobei durch die Kontrolleinheit (40) die Prädiktion des Fahrverlaufs basierend auf zumindest einer der folgenden Größen durchgeführt wird:
- Fahrpedalstellung
- Fahrpedalbewegung
- Aktueller Fahrverlauf
- Zustand des Fahrzeugs (100)
- Navigationsdaten
- Umgebungsdaten,
wobei durch die Kontrolleinheit (40) bei einem prädizierten Segelbetrieb (102) im Traktionsnetz (20) ein maximales oder zumindest im Wesentlichen maximales Spannungsniveau und bei einem prädizierten Rekuperationsbetrieb (103) im Traktionsnetz (20) ein minimales oder zumindest im Wesentlichen minimales Spannungsniveau eingestellt wird, wobei durch die Kontrolleinheit (40) der Fahrverlauf durch einen Fahrverlaufswert parametrisiert wird, dass durch die Kontrolleinheit (40) der Fahrverlaufswert mit zumindest einem Fahrverlaufsgrenzwert verglichen wird und dass durch die Kontrolleinheit (40) basierend auf dem Vergleichsergebnis die Prädiktion des Fahrverlaufs durchgeführt wird, wobei zwei Fahrverlaufsgrenzwerte verwendet werden, die als ein Segelgrenzwert und ein Rekuperationsgrenzwert ausgebildet sind, wobei der Segelgrenzwert größer ist als der Rekuperationsgrenzwert, und wobei bei einer Überschreitung des Segelgrenzwerts durch den Fahrverlaufswert durch die Kontrolleinheit (40) ein Segelbetrieb (102) prädiziert wird, bei einer Unterschreitung des Rekuperationsgrenzwerts durch den Fahrverlaufswert durch die Kontrolleinheit (40) ein Rekuperationsbetrieb (103) prädiziert wird und bei einer Überschreitung des Rekuperationsgrenzwerts und bei einer Unterschreitung des Segelgrenzwerts durch die Kontrolleinheit (40) eine aktuelle Prädiktion des Fahrverlaufs beibehalten wird.

2. Verfahren nach Anspruch 1,
**dadurch gekennzeichnet,**
**dass** durch die Kontrolleinheit (40) ein Benutzer des Fahrzeugs (100) ermittelt wird und dass durch die Kontrolleinheit (40) die Prädiktion des Fahrverlaufs angepasst auf ein in einer Speichereinheit (41) hinterlegtes Benutzerverhalten des ermittelten Benutzers vorgenommen wird.

3. Verfahren nach einem der vorangegangenen Ansprüche,
**dadurch gekennzeichnet,**
**dass** durch die Kontrolleinheit (40) die Prädiktion des Fahrverlaufs angepasst an eine in einer Speichereinheit (41) hinterlegte Historie des Fahrverlaufs des Fahrzeugs (100) vorgenommen wird.

4. Fahrzeug (100) mit einem Elektroantrieb (10), der Elektroantrieb (10) aufweisend zumindest eine Elektromaschine (11), wobei das Fahrzeug (100) zumindest in einem Segelbetrieb (102) und einem Rekuperationsbetrieb (103) betreibbar ist, wobei die Elektromaschine (11) im Segelbetrieb (102) eine Bewegung (101) des Fahrzeugs (100) nicht oder zumindest im Wesentlichen nicht beeinflusst und im Rekuperationsbetrieb (103) die Elektromaschine (11) zur Erzeugung elektrischer Energie aus einer Bewegungsenergie des Fahrzeugs (100) in einem Generatorbetrieb betreibbar ist, und wobei die Elektromaschine (11) mit einem Traktionsspeicher (12), der zum Speichern und Bereitstellen elektrischer Energie für die Elektromaschine (11) ausgebildet ist, in einem Traktionsnetz (20) elektrisch gekoppelt ist,
**dadurch gekennzeichnet,**
**dass** der Elektroantrieb (10) eine Kontrolleinheit (40) zum Ausführen eines Verfahrens nach einem der vorangegangenen Ansprüche zum Betreiben des Elektroantriebs (10) aufweist.

5. Fahrzeug (100) nach Anspruch 4,
**dadurch gekennzeichnet,**
**dass** der Elektroantrieb (10) Teil eines Hybridantriebs des Fahrzeugs (100) ist, wobei der Hybridantrieb zumindest den Elektroantrieb (10) und einen Verbrennungsmotor (50) aufweist.

6. Fahrzeug (100) nach Anspruch 4 oder 5,
**dadurch gekennzeichnet,**
**dass** der Elektroantrieb (10) eine Speichereinheit (41) zum Hinterlegen von Daten eines Betriebs des Elektroantriebs (10), insbesondere ein Benutzerverhalten eines Benutzers und/oder eine Historie eines Fahrverlaufs des Fahrzeugs (100), aufweist.

## Claims

1. Method for operating an electric drive (10) of a vehicle (100), the electric drive (10) having an electric machine (11), wherein the vehicle (100) can be operated at least in a sailing mode (102) and a recuperation mode (103), wherein furthermore a movement (101) of the vehicle (100) is not or at least substantially not influenced by the electric machine (11) in the sailing mode (102) and the electric machine (11) is operated in a generator mode for generating electrical energy from movement energy of the vehicle (100) in the recuperation mode (103), and wherein the electric machine (11) is electrically coupled to a traction storage device (12), which is designed to store and provide electrical energy for the electric machine (11), in a traction system (20), wherein a prediction of a driving course of the vehicle (100) at least in respect of the sailing mode (102) and the recuperation mode (103) is made by a control unit (40) of the electric drive (10), **characterized in that** an electrical voltage level of the no-load voltage of the traction storage device (12) is set by the control unit (40) in the traction system (20) based on the prediction of the driving course, wherein a higher voltage level of the no-load voltage of the traction storage device (12) is set by the control unit (40) in the case of a predicted sailing mode (102) in the traction system (20) than in the case of a predicted recuperation mode (103), wherein the prediction of the driving course is made by the control unit (40) based on at least one of the following variables:
- accelerator pedal position
- accelerator pedal movement
- current driving course
- state of the vehicle (100)
- navigation data
- environmental data,
wherein a maximum or at least substantially maximum voltage level is set in the case of a predicted sailing mode (102) in the traction system (20) and a minimum or at least substantially minimum voltage level is set in the case of a predicted recuperation mode (103) in the traction system (20) by the control unit (40), wherein the driving course is parameterized by a driving course value by the control unit (40), **in that** the driving course value is compared with at least one driving course limit value by the control unit (40) and **in that** the prediction of the driving course is made by the control unit (40) based on the comparison result, wherein two driving course limit values are used, which are in the form of a sailing limit value and a recuperation limit value, wherein the sailing limit value is greater than the recuperation limit value, and wherein a sailing mode (102) is predicted by the control unit (40) when the sailing limit value is exceeded by the driving course value, a recuperation mode (103) is predicted by the control unit (40) when the recuperation limit value is undershot by the driving course value and a current prediction of the driving course is maintained by the control unit (40) when the recuperation limit value is exceeded and the sailing limit value is undershot.

2. Method according to Claim 1,
**characterized**
**in that** a user of the vehicle (100) is determined by the control unit (40), and in that the prediction of the driving course is made by the control unit (40) in a manner matched to a user behaviour, which is stored in a memory unit (41), of the determined user.

3. Method according to either of the preceding claims,
**characterized**
**in that** the prediction of the driving course is made by the control unit (40) in a manner matched to a history, which is stored in a memory unit (41), of the driving course of the vehicle (100).

4. Vehicle (100) comprising an electric drive (10), the electric drive (10) having at least one electric machine (11), wherein the vehicle (100) can be operated at least in a sailing mode (102) and a recuperation mode (103), wherein the electric machine (11) does not or at least substantially does not influence a movement (101) of the vehicle (100) in the sailing mode (102) and the electric machine (11) can be operated in a generator mode for generating electrical energy from movement energy of the vehicle (100) in the recuperation mode (103), and wherein the electric machine (11) is electrically coupled to a traction storage device (12), which is designed to store and provide electrical energy for the electric machine (11), in a traction system (20),
**characterized**
**in that** the electric drive (10) has a control unit (40) for executing a method according to one of the preceding claims for operating the electric drive (10).

5. Vehicle (100) according to Claim 4,
**characterized**
**in that** the electric drive (10) is part of a hybrid drive of the vehicle (100), wherein the hybrid drive comprises at least the electric drive (10) and an internal combustion engine (50).

6. Vehicle (100) according to Claim 4 or 5,
**characterized**
**in that** the electric drive (10) has a memory unit (41) for storing data relating to operation of the electric drive (10), in particular user behaviour of a user and/or a history of a driving course of the vehicle (100).

## Revendications

1. Procédé de fonctionnement d'une propulsion électrique (10) d'un véhicule automobile (100), la propulsion électrique (10) comportant une machine électrique (11), dans lequel le véhicule automobile (100) peut fonctionner au moins dans un mode croisière (102) et dans un mode récupération (103), dans lequel, en outre, en mode croisière (102), un mouvement (101) du véhicule automobile (100) n'est pas ou du moins n'est sensiblement pas influencé par la machine électrique (11), et en mode récupération (103), pour produire de l'énergie électrique à partir d'une énergie de mouvement du véhicule automobile (100), la machine électrique (11) est utilisée en mode générateur, et dans lequel la machine électrique (11) est couplée électriquement à un accumulateur de traction (12), qui est conçu pour accumuler et fournir de l'énergie électrique destinée à la machine électrique (11), dans un réseau de traction (20), dans lequel une unité de commande (40) de la propulsion électrique (10) effectue une prédiction d'un trajet de déplacement du véhicule automobile (100) au moins en ce qui concerne le mode croisière (102) et le mode récupération (103),
**caractérisé en ce qu'**un niveau de tension électrique de la tension à vide de l'accumulateur de traction (12) est réglé par l'unité de commande (40) dans le réseau de traction (20) sur la base de la prédiction du trajet de déplacement, dans lequel un niveau de tension plus élevé de la tension à vide de l'accumulateur de traction (12) est réglé par l'unité de commande (40) dans le réseau de traction (20) dans un mode croisière (102) prédit que dans un mode récupération (103) prédit,
dans lequel l'unité de commande (40) effectue la prédiction du trajet de déplacement sur la base d'au moins l'une des grandeurs suivantes :
- position de la pédale d'accélérateur,
- mouvement de la pédale d'accélérateur,
- trajet de déplacement actuel,
- état du véhicule automobile (100),
- données de navigation,
- données environnementales,
dans lequel un niveau de tension maximal ou du moins sensiblement maximal est réglé par l'unité de commande (40) dans le réseau de traction (20) dans un mode croisière (102) prédit et un niveau de tension minimal ou du moins sensiblement minimal est réglé dans le réseau de traction (20) dans un mode récupération (103) prédit, dans lequel l'unité de commande (40) paramètre le trajet de déplacement par une valeur de trajet de déplacement, **en ce que** l'unité de commande (40) compare la valeur de trajet de déplacement à au moins une valeur limite de trajet de déplacement et **en ce que** l'unité de commande (40) effectue la prédiction du trajet de déplacement sur la base du résultat de la comparaison, dans lequel on utilise deux valeurs limites de trajet de déplacement qui sont établies en tant que valeur limite de croisière et que valeur limite de récupération, dans lequel la valeur limite de croisière est supérieure à la valeur limite de récupération, et dans lequel un mode croisière (102) est prédit par l'unité de commande (40) en cas de dépassement en sens croissant de la valeur limite de croisière par la valeur de trajet de déplacement, un mode récupération (103) est prédit par l'unité de commande (40) en cas de dépassement en sens décroissant de la valeur limite de récupération par la valeur de trajet de déplacement, et une prédiction actuelle du trajet de déplacement est maintenue par l'unité de commande (40) en cas de dépassement en sens croissant de la valeur limite de récupération et en cas de dépassement en sens décroissant de la valeur limite de croisière.

2. Procédé selon la revendication 1,
**caractérisé en ce qu'**un utilisateur du véhicule automobile (100) est identifié par l'unité de commande (40) et **en ce que** l'unité de commande (40) effectue la prédiction du trajet de déplacement de manière adaptée à un comportement d'utilisateur, enregistré dans une unité de mémoire (41), de l'utilisateur identifié.

3. Procédé selon l'une des revendications précédentes, **caractérisé en ce que** l'unité de commande (40) effectue la prédiction du trajet de déplacement de manière adaptée à un historique, enregistré dans une unité de mémoire (41), du trajet de déplacement du véhicule automobile (100) .

4. Véhicule automobile (100) comprenant une propulsion électrique (10), la propulsion électrique (10) comportant au moins une machine électrique (11), dans lequel le véhicule automobile (100) peut fonctionner au moins dans un mode croisière (102) et dans un mode récupération (103), dans lequel la machine électrique (11), en mode croisière (102), n'influence pas ou du moins sensiblement pas un mouvement (101) du véhicule automobile (100) et, en mode récupération (103), la machine électrique (11) peut être utilisée dans un mode générateur pour produire de l'énergie électrique à partir d'une énergie de mouvement du véhicule automobile (100), et dans lequel la machine électrique (11) est couplée électriquement à un accumulateur de traction (12), qui est conçu pour accumuler et fournir de l'énergie électrique destinée à la machine électrique (11), dans un réseau de traction (20),
**caractérisé en ce que** la propulsion électrique (10) comporte une unité de commande (40) destinée à mettre en œuvre un procédé selon l'une des revendications précédentes pour faire fonctionner la propulsion électrique (10).

5. Véhicule automobile (100) selon la revendication 4, **caractérisé en ce que** la propulsion électrique (10) fait partie d'une propulsion hybride du véhicule automobile (100), dans lequel la propulsion hybride comprend au moins la propulsion électrique (10) et un moteur à combustion interne (50).

6. Véhicule automobile (100) selon la revendication 4 ou 5,
**caractérisé en ce que** la propulsion électrique (10) comporte une unité de mémoire (41) destinée à stocker des données d'un fonctionnement de la propulsion électrique (10), en particulier un comportement d'utilisateur et/ou un historique d'un trajet de déplacement du véhicule automobile (100).
